# EUROPEAN PATENT APPLICATION

(11) **EP 1 156 606 A2**
(43) Date of publication of application: **21.11.2001**
(21) Application number: 01202898.1
(22) Date of filing: 21.10.1992
(51) Int. Cl.: H04B 10/18

(54) **An optical transmission system**

(30) Priority: 21.10.1991 JP 27161591; 21.10.1991 JP 27161791; 21.10.1991 JP 27161991
(62) Divisional of application: 92309601.0
(71) Applicant: NEC CORPORATION, Tokyo (JP)
(72) Inventor: Kaede, Kazuhisa, Tokyo (JP); Takano, Isamu, Tokyo (JP)
(74) Representative: Orchard, Oliver John

(57) **Abstract**

An optical transmission system is described that can perform not only the amplification of an optical signal but also dispersion pre-equalization, since the signals are optical. The optical power level of an optical signal propagating through a dispersion medium 101a is amplified in an optical amplifier 102, the signal becoming an optical signal a. A phase modulator driving circuit 104 outputs a signal b corresponding to the envelope signal of the optical signal a. An optical phase modulator 103 to which the signals a and b are applied phase-modulates the input optical signal a, and outputs an optical signal d upon which dispersion pre-equalization is carried out in dispersion medium 101b.

## Description

The invention relates to an optical transmission system. Such systems employ optical repeaters and the invention also relates to optical repeaters for use in an optical transmission system.

It is known to employ a transmission system, which uses optical signals, which is known as a 1R optical transmission system and which uses optical amplifiers. The 1R system, in particular, is designed to compensate for the loss during transmission of the power level of the optical signal in an optical fiber transmission path, to raise the power level of the optical signal to a desired level, and to send the signal to an optical fiber transmission path. Such a system is mentioned in a paper entitled "Trunk and Distribution Network Application of Erbium-Doped Fiber Amplifier" by K. Nakagawa et al. reported on pp. 198 to 208 of "Journal of Lightwave Technology", Vol. 9 No. 2 published by the IEEE in February 1991. Furthermore, a dispersion pre-equalization method called the prechirp method has been proposed by N. Henmi et al. in a paper reported in Technical Digest PD8 (Post Deadline paper No. 8) of the International Conference on Optical Fiber Communication, 1990. This method includes the step of dispersion-pre-equalizing a transmitted optical signal by frequency-modulating a semiconductor laser at an optical terminal station, in order to decrease the power loss caused by wavelength dispersion, and to enable the repeater spacing to be increased.

Reference will now be made to the optical trunk transmission method described in the paper mentioned above by K. Nakagawa et al. In the Nakagawa paper it is said that it is conventional practice to employ regenerative repeating, consisting of 3R's (reshaping, retiming, and regenerating) in each repeater interval for limiting or reducing dispersion and loss, and in general to practice 3R regenerative repeating after the collective amplification of the signal frequency by 1R (reshaping) using an optical amplifier which is designed to limit dispersion or noise caused by noise accumulation in the optical amplifier. Also in the case of the optical trunk transmission of a frequency-multiplexed signal consisting of N (where N is a positive integer) frequency waves, the signal is sent to an optical transmission path after dividing the waves at each repeater point, repeating each wavelength in one of the above-mentioned ways, and multiplexing the waves of all of the wavelengths again.

In the specification of European patent application number 90122834.6, which was published under number 430230 on June 5 1991, there was proposed an optical transmitting apparatus in which a plurality of transmitting signal lights were supplied from a semiconductor laser light source which was modulated by a current having adjusted amplitude and phase injected thereinto in an optical transmitting apparatus. The signal lights were modulated in intensity by a plurality of external modulators, and a time-difference was applied among the signal lights. Thus, the signal lights were combined to provide a transmitting signal light which wa propagated through a transmission line. At this time, a frequency component having a low transmission speed was supplied to the transmission line earlier than a frequency component having a fast transmission speed in compliance with a wavelength dispersion property of the transmission line.

In the specification of International patent application number PCT/GB87/00050 which was published under number WO87/04529 on July 30 1987 there was proposed a method and apparatus for reducing fluctuations such as phase noise in a characteristic of a coherent beam of radiation. The apparatus included an interferometer for sensing the fluctuation at a first position to generate an interference beam. The interference beam was incident on a radiation detector, such as a photodiode, which generated an electric output signal responsive to the intensity of the incident beam. This signal was amplified by an amplifier and fed to a phase modulator. Another portion of the original laser beam was also fed to the phase modulator. The arrangement was such that the phase modulations applied to the beam by the phase modulator under the control of the signal from the detector reduced or cancelled the phase noise in the original beam.

In the specification of European patent application. number 87105642.0, which was published under number 242802 on October 28 1987, there was proposed an optical wavelength division multiplex transmission system which included an optical multiplexer for multiplexing a plurality of optical signals having different wavelengths into a wavelength-division multiplexed signal, optical amplifiers for amplifying the wavelength-division multiplexed signal from the optical multiplexer, and an optical filter disposed between adjacent ones of the optical amplifiers for suppressing undesired spectra of the wavelength-division multiplexed signal from an optical amplifier.

However, in a conventional optical trunk transmission system that repeats and transmits an optical signal using an optical amplifier, there is the problem that the transmission length is restricted by wavelength dispersion, because of the influence of the deterioration of the waveform as a result of wavelength dispersion in the optical fiber, although the power level of the optical signal is amplified. Moreover, in the prechirp method mentioned above that compensates for the influences of wavelength dispersion in advance and sends out an optical signal, there is the problem that the maximum transmission length is restricted because the wavelength dispersion value which can be compensated is restricted in practice.

Furthermore, even practising 3R regenerative repeating, when sending a frequency or wavelengthmultiplexed signal of N waves, an optical trunk transmission system which involves dividing N waves at each repeater and regeneratively repeating each wavelength has some problems, in that N light sources for sending N waves are needed for each repeater, the wavelength of each light source for sending having to be adjusted to correspond to the wavelength of each channel of the optical multiplexing circuit thus requiring extremely highly accurate light sources to be selected for sending a wavelength or frequency corresponding to the wavelength of each channel, and extremely high stability of each source being required to cope with temperature change and age-deterioration. Additionally, there is the problem that control circuits are naturally needed in such a system, and the size of such a system including control circuits becomes more than N-times bigger than a conventional single wavelength photonic repeater that does not need any highly accurate wavelength controllers.

One application of this invention is to enable dispersion pre-equalization of a 1R multi-step trunk transmission system to be achieved by optical compensation of the dispersion.

In one arrangement that will be described a predetermined optical modulation of the phase of an optical signal is carried out by synchronization with the phase of an envelope signal of the optical signal, which is intensity-modulated and transmitted through a dispersion medium.

It is also feasible for a signal that intensity-modulates an optical signal to be an RZ modulated signal, and a signal that optically phase-modulates the optical signal to be a sine-wave modulated signal of the RZ signal's fundamental frequency.

Moreover, it is also feasible for a signal that intensity-modulates an optical signal to be an NRZ signal, and a signal that optically phase-modulates the optical signal to be an NRZ signal obtained by equalizing an electric signal obtained by opto-electro-converting the optical signal.

Furthermore, it is also feasible for a signal that intensity-modulates an optical signal to be an NRZ signal, and a signal that optically phase-modulates the optical signal to be an NRZ signal obtained by waveform-equalizing after carrying-out a discrimination decision for an electric signal obtained by opto-electro-converting the optical signal.

An optical trunk transmission system in one arrangement to be described includes an optical repeating circuit having an optical amplifier for optically amplifying an optical signal propagated through an optical fiber transmission path, an optical branch circuit for branching a part of an optical output signal from the optical amplifier, an optical phase modulator connected with a first output terminal of an optical branch circuit for phase-modulating an input signal and outputting the phase-modulated optical signal to an optical fiber transmission path in a backward step, a receiving circuit connected with the second output terminal of the optical branch circuit, for converting an input optical signal to an electrical signal, a timing extraction circuit for extracting a timing signal from the electrical output signal of the receiving circuit, an optical phase modulator driving circuit for setting the timing signal at a pre-determined voltage amplitude and for setting the signal in a pre-determined phase according to a phase difference signal and for driving the optical phase modulator, and a phase detection circuit for detecting a phase difference between the phase of an output of the optical phase modulator driving circuit and the phase of an envelope of the input signal to the optical phase modulator in order to provide an output signal as a phase difference signal.

In a particular arrangement to be described below there is provided a sinusoidal signal generator for generating a sine-wave signal in a phase according to a first phase difference signal and a first phase detection circuit for detecting a phase difference between the phase of the output signal from the sinusoidal signal generator and the phase of the timing signal, and for feeding back the first phase difference signal to the sinusoidal signal generator, the optical phase modulator driving circuit setting the output signal from the sinusoidal signal generator at a predetermined voltage amplitude and setting the output signal in a predetermined phase according to a second phase difference signal, and a second phase detection circuit for detecting the phase difference between the output phase of the optical phase modulator driving circuit and the phase of the envelope of the input signal to the optical phase modulator in order to provide an output signal as a second phase difference signal.

In yet another arrangement to be described below an optical trunk transmission system includes an optical amplifier for optically amplifying an optical signal propagated through an optical fiber transmission path, an optical branch circuit for branching a part of an optical output of the optical amplifier, an optical phase modulator connected with the first output terminal of the optical branch circuit, for phase-modulating an input signal and outputting the phase-modulated optical signal to an optical fiber transmission path in a backward step, a receiving circuit connected with a second output terminal of the optical branch circuit, for converting an input optical signal to an electrical signal, an equalization circuit for equalizing an output of the receiving circuit close to the envelope waveform of the optical signal, an optical phase modulator driving circuit for converting an output signal from the equalization circuit to a predetermined voltage amplitude, for setting the output signal to a predetermined phase according to the phase difference signal and for driving the optical phase modulator, and a phase detection circuit for detecting a phase difference between the phase of an output signal of the optical phase modulator driving circuit and the phase of the envelope of an input signal to the optical phase modulator, in order to provide an output signal as the phase difference signal.

An optical repeater circuit in one particular arrangement to be described includes an optical amplifier for optically amplifying an optical signal propagated through an optical fiber transmission path, an optical branch circuit for branching a part of an output optical signal of the optical amplifier, an optical phase modulator connected to a first output terminal of the optical branch circuit, for phase-modulating an input signal and outputting a phase-modulated optical signal to an optical fiber transmission path in a backward step, a receiving circuit connected to a second output terminal of the optical branch circuit, for converting an input optical signal to an electrical signal, a timing extraction circuit for extracting a timing signal from the electrical output signal of the receiving circuit, a discrimination decision circuit for discriminating an electrical output signal of the receiving circuit by reference to a timing signal as a clock signal, an equalization circuit for equalizing an output of the discrimination decision circuit close to an envelope waveform of the optical signal, an optical phase modulator driving circuit for converting an output signal from the equalization circuit to a predetermined voltage amplitude, for setting the output signal to a pre-determined phase according to the phase difference signal and for driving the optical phase modulator, and a phase detection circuit for detecting a phase difference between the phase of an output of the optical phase modulator driving circuit and the phase of the envelope of an input signal to the optical phase modulator in order to provide an output signal as a phase difference signal.

Furthermore, in the case in which there is frequency or wavelength-multiplexing of N waves, it is preferable that a plurality of optical transmitters each have a light source at a different frequency or wavelength from the others, optimum dispersion pre-equalization being performed for each frequency or wavelength, the optical signals sent from the optical transmitters being multiplexed in a first optical multiplexing circuit and being sent to an optical transmission path, optical multiplexed signals sent out to the optical transmission path being divided at an optical dividing circuit into a plurality of frequencies or wavelengths corresponding to each wavelength of the optical transmitters at one or more points in the optical transmission path, the optical signals being optically amplified and optimum dispersion pre-equalized at each frequency or wavelength, the signals being multiplexed and sent out again at a second optical multiplexing circuit to the optical transmission path and being transmitted through an optical trunk circuit, the signals being divided again into a plurality of optical signals each corresponding to an optical wavelength at the receiving end, and the optical signals being received by an optical receiver at each respective wavelength.

The arrangements described include not only amplifying the amplitude of an optical signal by an optical amplifier but also pre-equalizing the optical signals by directly phase modulating an optical signal against any deterioration of the waveform of the optical signal caused by wavelength dispersion in an optical transmission path. As the result, 3R repeaters needing opto-electro conversion that complicates the repeater configuration are less likely to be necessary.

Moreover, when frequency or wavelength-multiplexing N waves, it is sufficient for there to be at the sending and a plurality of optical transmitter sources, each having a different wavelength, which is selected with a high degree of accuracy in an absolute value of wavelength or frequency and is frequency or wavelength controlled to a high degree of accuracy. Such optical sources are not necessarily employed at each repeater. That is, the system can provide long span trunk transmission using multistage-repeating, without the conversion of an optical signal to an electrical signal, because of the dispersion pre-equalization at the optical repeaters and optical signal amplification which is possible with the optical amplifiers. As a result, the wavelength or frequency control that requires complexity and high accuracy may be carried out at the sending-end. When deviation of the transmitted wavelength or frequency from normal, due to the deterioration of a sending optical source occurs, it is sufficient to change a failed light source to new one only at the transmitting end. Moreover, in the case of a conventional optical trunk transmission system which carries out regenerative repeating at each optical repeater, a plurality of transmitting or sending light sources is needed for each frequency or wavelength and optical repeaters. Therefore, there can be considerable difficulty in dealing with any problem caused by light sources at the transmitter. However, for the optical trunk transmission system to be described, it is sufficient that it be equipped with light sources only at the transmitting or sending-end, so that it is easy to provide standby or replacement light sources, even should the system require tens to hundreds of transmitting light sources. Easy access to the transmitting light sources is particularly of value in the short term in order to repair the light sources. Additionally, in the embodiments to be described it is comparatively easy to cope with any accidental error that might occur when using transmitting light sources of various wavelengths.

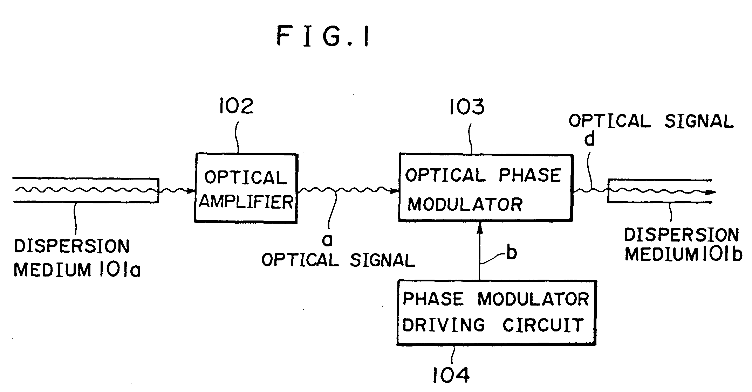

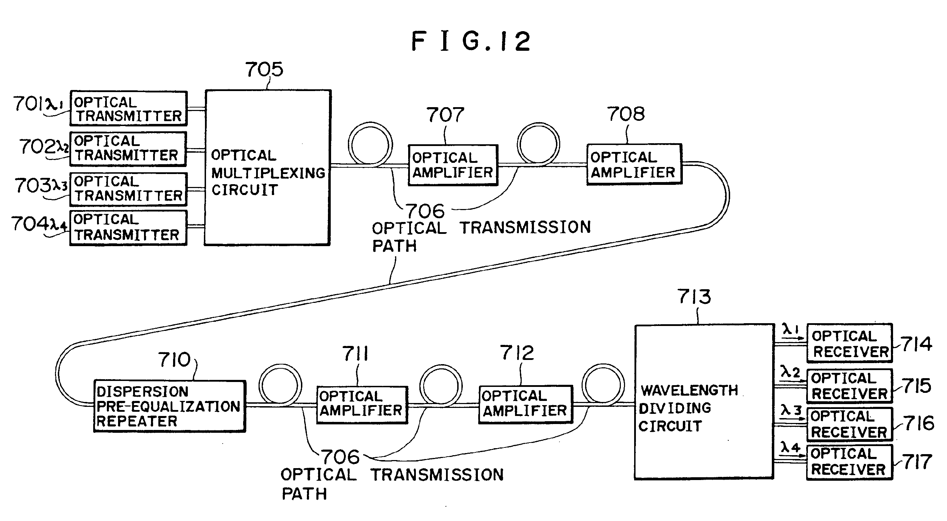

There will now be described with reference to the accompanying drawings, firstly, with reference to Figs. 1 to 11, arrangements which do not fall within the scope of the claims, but which are helpful in understanding the invention, and secondly, by way of example, with reference to Figs. 12 to 14, the invention which is characterised in the claims, whose terms determine the scope of the protection conferred hereby.

In the drawings:-
Fig. 1 is a schematic block diagram of a fundamental optical repeater circuit,
Figs. 2a to 2d show waveforms to explain the operation of the optical repeater circuit shown in Fig. 1,
Figs. 3a to 3d are further waveforms to explain the operation of the optical repeater circuit shown in Fig. 1,
Fig. 4 is a block diagram of one embodiment,
Fig. 5 is a detailed block diagram showing in detail a part of the embodiment shown in Fig. 4,
Fig. 6 is a second detailed block diagram showing in detail a further part of the embodiment shown in Fig. 4,
Fig. 7 is a diagrammatic perspective view showing in detail a part employed in the embodiment shown in Fig. 4,
Fig. 8 is another detailed block diagram showing in detail a further part of the embodiment shown in Fig. 4,
Fig. 9 is a block diagram of another embodiment,
Fig. 10 is a block diagram illustrating yet another embodiment,
Fig. 11 is a block diagram illustrating a further embodiment,
Fig. 12 is a block diagram illustrating yet a further embodiment,
Fig. 13 is a detailed block diagram showing a part of the configuration of the embodiment shown in Fig. 12, and
Fig. 14 is another detailed block diagram showing a further part of the configuration of the embodiment shown in Fig. 12.

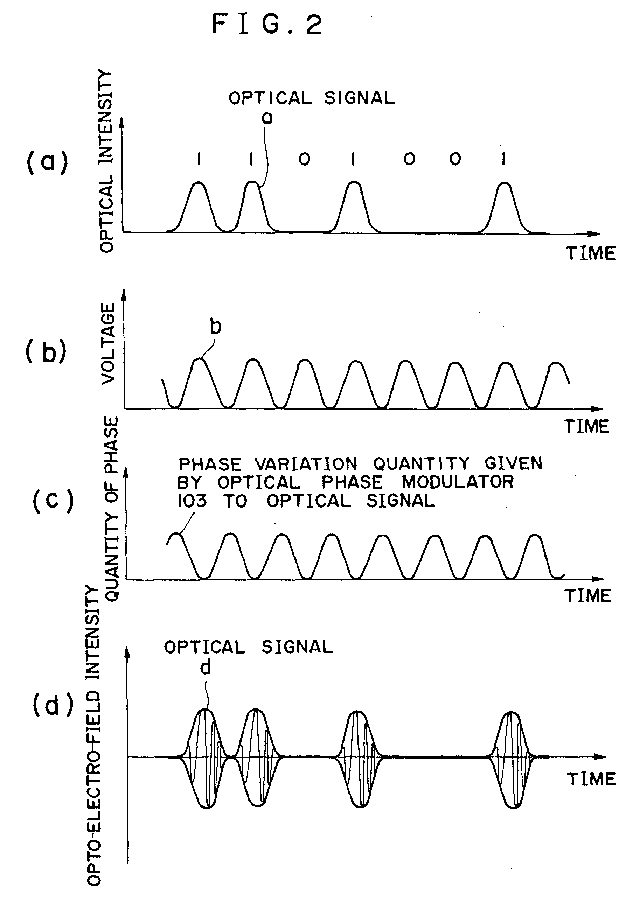

Referring to Fig. 1, the signal light propagating through an optical transmitting medium 101a, of which optical power level is amplified in an optical amplifier 102, inputs to an optical phase modulator 103 as an optical signal a. If the optical signal a is an RZ return to zero intensity-modulated signal the waveform of the optical signal a becomes approximately same to the waveform of the sending optical signal as shown in Fig.2a due to dispersion pre-equalization at the sending-end. The signal light supplied to the optical phase modulator 103 is phase-modulated by the signal b output from the phase modulator driving circuit 104. As shown in Fig.2b, the signal b output from the phase modulator driving circuit 104 is a sine-wave signal having the fundamental frequency of the envelope signal of the optical signal a. As shown in Fig.2b and Fig. 2a, when the intensity of the optical signal a is maximum, the drive voltage supplied to the optical phase modulator 103 is also maximum. Here, the phase modulator 103 gives a negative phase variation to the optical signal a when the drive voltage of the signal b changes higher position and gives a positive phase variation to the optical signal a when the drive voltage of the signal b changes lower position. Therefore, the optical signal propagating through the optical phase modulator 103 receives maximum phase variation in negative direction when the intensity of the optical signal a is maximum, and maximum phase variation in positive direction when the intensity of the optical signal a is minimum, as shown in Fig.2c. As the result, the carrier frequency of the optical signal d output from the optical phase modulator 103 deviates lower from the carrier central frequency at the tip or rise of each pulse of the optical signal d and higher from the carrier central frequency at the end or fall of each pulse of the optical signal d as typically shown in Fig.2d.

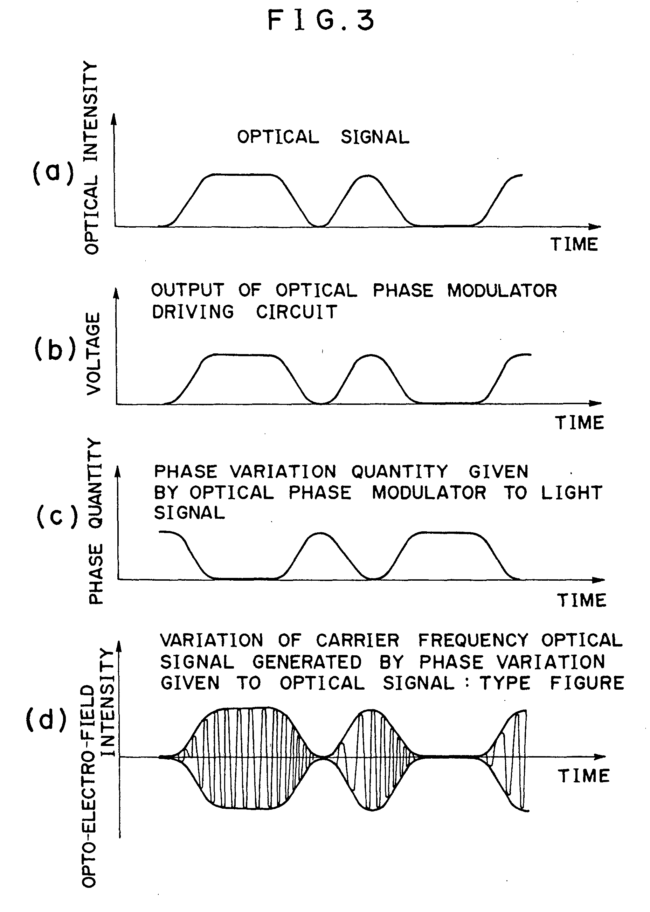

Next, if the optical signal a is an NRZ (non-return to zero) intensity-modulated signal, similarly to the above, the waveform of the optical signal a becomes approximately same to the waveform of the sending optical signal as shown in Fig.3a due to dispersion pre-equalization at the sending-end. The optical signal supplied to the optical phase modulator 103 is phase-modulated by the drive signal b output from the phase modulator driving circuit 104. As shown in Fig.3b, the signal b output from the phase modulator driving circuit 104 is an NRZ signal having the same waveform to the optical signal a. Here, the optical phase modulator 103 gives negative phase variation to the optical signal a when the drive voltage of the signal b changes higher position and gives positive phase variation to the optical signal a when the drive voltage of the signal b changes lower position. Therefore, the phase variation of the signal light propagating through the optical phase modulator 103 becomes as shown in Fig.3c. As the result, the carrier frequency of the optical signal d output from the optical phase modulator 103 deviates lower from the carrier central frequency at the rise of the optical signal a and higher from the carrier central frequency at the fall of the optical signal a as typically shown in Fig.2d. In the optical repeating circuit shown in Fig.1, about 3.2GHz frequency deviation is given by the modulator 103 for transmitting both the NR and NRZ optical signals of which intensity-modulated signal speed is 10Gb/s through the dispersion medium of which total dispersion value in length is 1000ps/nm.

The fact that optical signals of which waveforms are less distorted can be obtained after transmission by this wavelength dispersion pre-equalization, is detailed in said paper by N.Henmi and others reported on Technical Digest PD8 (Post Deadline paper #8) of International Conference on Optical Fiber Communication, 1990.

At first, the first embodiment is explained.

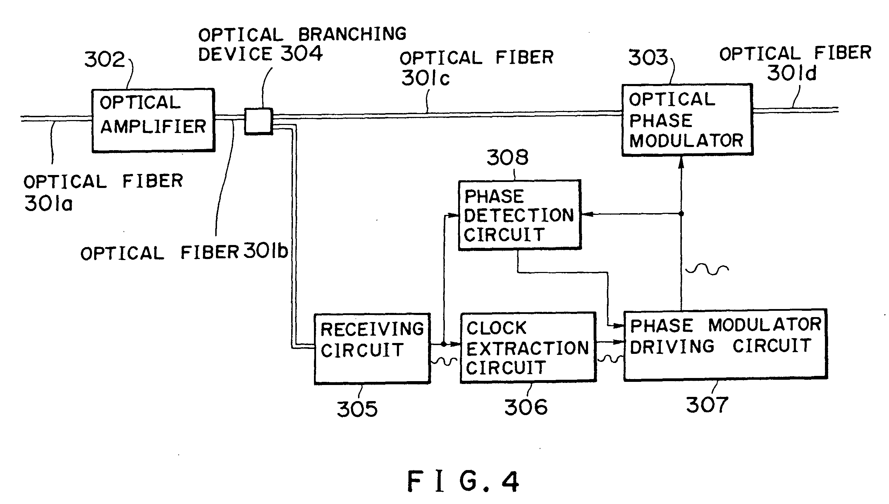

In Fig.4, the RZ modulated optical signal,of which the wavelength is 1.57µm and intensity modulated signal speed is 10Gb/s, is transmitted through the optical fiber 301a which is a 1.55µm zero dispersion optical fiber. Then, the RZ modulated signal is supplied to the optical amplifier 302 at an optical power level of -18dBm keeping almost the same pulse waveform as shown in Fig. 2a. The RZ modulated signal to the optical fiber 301a is dispersion pre-equalized at a sending-end not shown in Fig. 4. The RZ modulated signal is optically amplified to optical power level 10dBm by the optical amplifier 302.

Most of the output signal of the optical amplifier 302 is supplied to the optical phase modulator 303 through the optical fibers 301b and 301c, and a part of the output signal (about 1/100) is branched in an optical branching device 304 and converted to an electrical signal by a receiving circuit 305 including a photo-diode. The clock extraction (or regenerating) circuit 306 extracts a 10GHz clock signal from the 10Gb/s electrical signal output from the receiving circuit 305 and outputs a 10Gbs clock signal whose phase is coincident with the phase of the received optical signal. The clock extraction circuit 306 includes a cavity for extracting a 10MHz frequency component from the output signal of the receiving circuit 305. The cavity is shown in USP 4,737,970. The 10MHz clock signal from the cavity is a sine-wave signal and it is the output signal of the clock extracting circuit 306. Now, the phase modulator driving circuit 307 amplifies the clock signal from the clock extraction circuit 306 to a predetermined voltage, arranges the phase of the signal to be a predetermined phase according to the signal from the phase detection circuit 308, and outputs a drive signal to the optical phase modulator 303. Here, there is a phase modulator having a half wavelength voltage of about 10V, being given about π/5 [rad] phase deviation in peak-to-peak value, and a sine-wave drive signal of which peak-to-peak value is about 2.0V as shown in Fig. 2b. The optical signal input to the optical phase modulator 303 is phase-deviated about π/5 [rad] in peak-to-peak value as shown in Fig. 2c by the drive signal. As a result, as schematically shown in Fig. 2d, the carrier frequency of the 10Gb/s signal is modulated, it is deviated to be lower than the carrier central frequency at the rise of the optical pulse and higher than the carrier central frequency at the fall of the optical pulse. Here, the optical signal is phase-modulated corresponding to a 1000ps/nm wavelength dispersion, about 300km by pre-equalization transmission being employed with an average wavelength dispersion value at a wavelength 1.57µm being about 3ps/nm.km.

Next, the optical phase modulator driving circuit 307, the phase detection circuit 308, the optical phase modulator 303 and the optical amplifier 302 are explained briefly.

Additionally, the configuration of the optical phase modulator driving circuit, the phase detection circuit, the optical phase modulator and the optical amplifier in the embodiments described below are similar to the above described embodiments.

First of all, the phase detection circuit is to be explained.

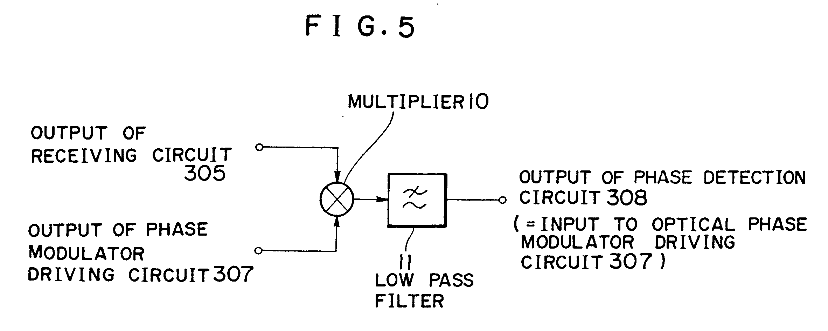

Two input signals to the phase detection circuit 308 shown in Fig. 5, such as the output of the receiving circuit 305 and the output of the optical phase modulator driving circuit 307, are input to the multiplier 10. The output of the multiplier 10 becomes the output of the phase detection circuit 308 through the low pass filter 11. Here, the output voltage level changes in proportion to the phase difference of the output of the receiving circuit 305 and the output of the optical phase modulator driving circuit 307.

Next, the optical phase modulator driving circuit is explained.

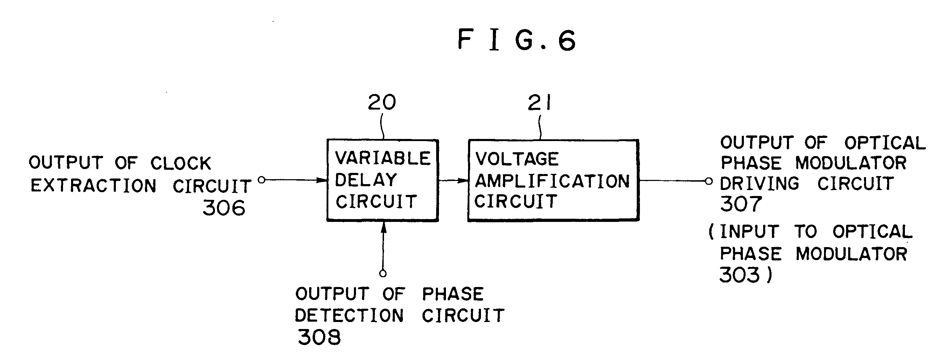

The output of the phase detection circuit 308 is supplied to the delay quantity control terminal in the voltage driven type variable delay circuit 20 shown in Fig. 6, and controls the amount of delay of the output signal from the clock extraction circuit 306. Therefore, the delay value of the signal from the clock extraction circuit 306 is varied corresponding to the output of the phase detection circuit 308. The output of the variable delay circuit 20 is amplified to 2.0V in peak-to-peak value at the voltage amplification circuit 21, and then output.

Next, the optical phase modulator is explained.

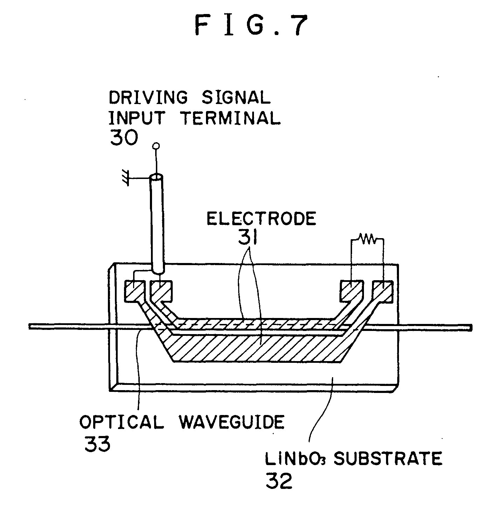

The output signal of the optical phase modulator driving circuit 307 is supplied to a driving circuit input terminal 30 in the optical phase modulator 303 shown in Fig. 7, and the voltage depending upon the signal is applied between the electrodes 31. The refractive index of the optical waveguide 33 formed on a LiNbO₃ substrate 32 changes by the electro-opto-effect caused by the voltage charged between the electrodes 31. As a result, the phase of the optical signal propagating in the optical waveguide 33 is modulated.

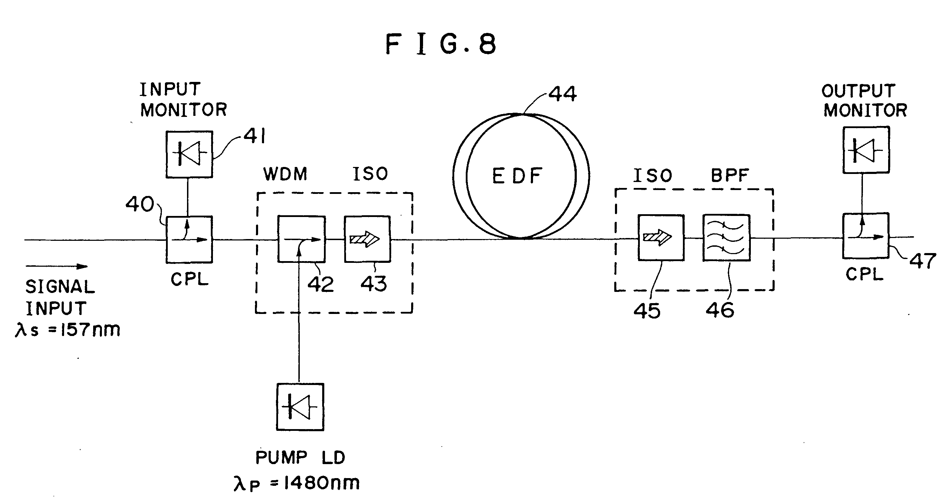

Next, the optical amplifier is explained. As shown in Fig. 8, a part of the input optical signal of the wavelength 1.57µm is supplied to the photo diode 41 from the optical coupler (CPL) 40 as the monitor signal and it is monitored. Most of the input signal which is supplied to the optical wavelength synthesizer (WDM) 42, is synthesized with the 1.48µm excited signal, and is supplied to the erbium-doped optical fiber (EDF) 44 through the optical isolator (ISO) 43. The signal light of wavelength 1.57µm is optically amplified in the EDF 44, and supplied to the optical coupler (CPL) 47 through the optical isolator (ISO) 45 and the band pass filter (BPF) 46, a part being monitored. Thus practically all optical signals are output.

The above-mentioned band pass filter (BPF) 46 is equipped to filter optical components except the signal light of 1.57µm. Also, the optical isolator (ISO) 45 is equipped to prevent the reflected backward wave at the access point of the BPF 46.

In the first embodiment, the optical power level of the signal transmitted to the optical fiber 301d, is about 5dBm due to insertion loss of the optical phase modulator 303. Further, because the transmission loss of the 300km optical fiber is about 70 to 80dB, 3 to 4 optical amplifiers should be connected between the two optical repeaters (each optical repeater is shown in Fig.4) which are located in 300Km distance. The waveform of the optical signal to the optical repeater in the next step is the approximately same waveform as the optical signal waveform shown in Fig.2a, and the optical signal can be repeated again like the above-mentioned method and configuration.

Next, the second embodiment is explained.

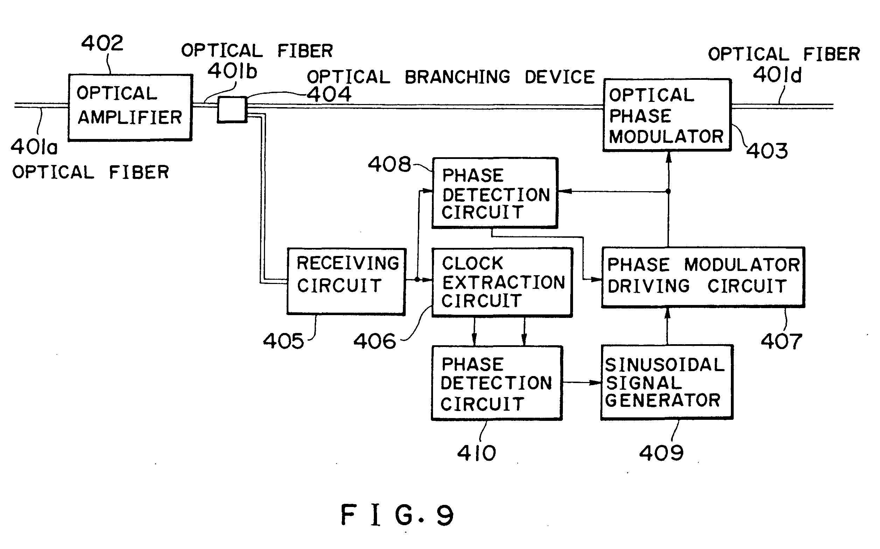

In Fig.9, the RZ modulated optical signal of wavelength 1.57µm and intensity-modulated signal speed 10Gb/s, is transmitted in the optical fiber 401a of 1. 55µm zero dispersion optical fiber. Then, the RZ optical signal is optically amplified in the optical amplifier 402, and the output light is phase-modulated in the optical phase modulator 403 for performing dispersion pre-equalization is similar to the first embodiment in Fig.4. However, the method to generate the driving signal to charge on the optical phase modulator 403 is different.

In this embodiment, at first the sinusoidal signal generator 409 generates the sine-wave signal of 10GHz, the second phase detection circuit 410 detects the phase difference between the sine-wave and the clock signal of the fundamental frequency of the optical signal extracted by the clock extraction circuit 406. The sinusoidal signal generator 409 adjusts a frequency of the sine-wave signal corresponding to the output of the second phase detection circuit 410 so that the frequency is approximately the same as the fundamental frequency of the optical signal. The sine-wave signal from the generator 409 is output to the phase modulator driving circuit 407.

The phase of a driving signal that is an output of the phase modulator 407 is explained as below. The receiving circuit 405 performs the opto-electroconversion of the optical signal branched a part of the optical signal to the optical phase modulator 403. The phase detection circuit 408 detects the phase difference between the output of the receiving circuit 405 and the output signal of the phase modulation driving circuit 407. By feeding back the phase difference signal to the phase modulator driving circuit 407 as a control signal, it performs phase arrangement for the driving signal in the phase modulator driving circuit 407, so that the phase relation of the envelope of the optical signal in the optical phase modulator 403 and the driving signal similar to the relation shown in Figs.2a and 2b.

Next, the third embodiment is explained.

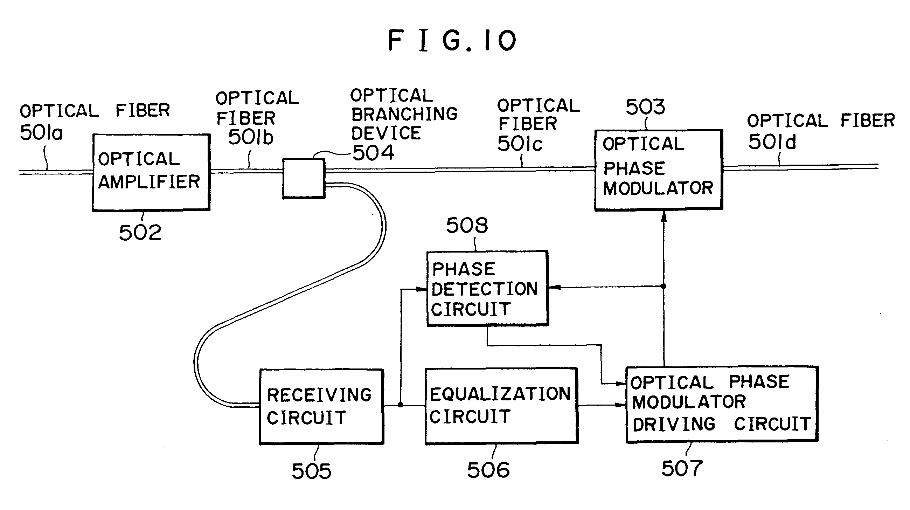

In Fig.10, the NRZ modulated optical signal of which wavelength is 1.57µm and intensity-modulated signal speed is 10Gb/s, transmitted through the optical fiber 501a that is a 1.55µm zero dispersion optical fiber, is supplied to the optical amplifier 502 at optical power level -18dBm. The NRZ optical signal has approximately the same pulse waveform as the optical pulse waveform as shown in Fig.3a by dispersion pre-equalization at a sending-end (not shown in Fig.10), and optically amplified to optical power level 10dBm by the optical amplifier 502.

The most part of the output signal of the optical amplifier 502 is supplied to the optical phase modulator 503 through the optical fiber 501b, the optical branching device 504 and the optical fiber 501c, and a part of them (about 1/100) is branched in the optical branching device 504 and converted to electric signal in the receiving circuit 505. The waveform of this receiving signal is equalized by the equalization circuit 506 to be approximately same NRZ signal waveform of the input optical signal to the phase modulator 503. The optical phase modulator driving circuit 507 converts the equalized NRZ signal to the NRZ signal having a predetermined peak value of output voltage. The phase detection circuit 508 detects the phase difference between the phase of the input signal, which is monitored in the receiving circuit 505, and the phase of output signal of the optical phase modulator driving circuit 507. By feeding back the result to the optical phase modulator driving circuit 507, it controls the phase difference to be zero approximately. The output voltage of the optical phase modulator driving circuit 507 is charged on the optical phase modulator 503. Here, as used a phase modulator of which a half wavelength voltage is about 5V, being given about 2π/5[rad] phase deviation in peak-to-peak value, the NRZ signal of which peak-to-peak value is about 2.0V as shown in Fig.3b. The optical signal supplied to the optical phase modulator 503 is phase-deviated about 2π/5[rad] in peak-to-peak value as shown in Fig.3c by the drive signal. As the result, as typically shown in Fig.3d, the carrier frequency of the 10Gb/s signal is modulated, it is deviated lower from the carrier central frequency at the rise of the optical pulse and higher from the carrier central frequency at the fall of the optical pulse. Here, the optical signal is phase-modulated correspondingly to 1000ps/nm wavelength dispersion, about 300km by pre-equalization transmission is practiced in the condition that an average wavelength dispersion value at wavelength 1.57µm is about 3ps/nm·km.

Moreover, the optical power level transmitted to the optical fiber 501d is about 5dBm due to insertion loss of the optical phase modulator 503. Further, since the transmission loss of the 300km optical fiber is about 70 to 80dB, 3 to 4 optical amplifiers should be connected between the two optical repeaters (each optical repeater is shown in Fig.10) which are located in 300Km distance. The waveform of the input signal to the optical repeater in the next step is the approximately same waveform to the optical signal waveform shown in Fig.3a, and the optical signal can be repeated again like the above-mentioned method and configuration.

Next, the fourth embodiment is explained.

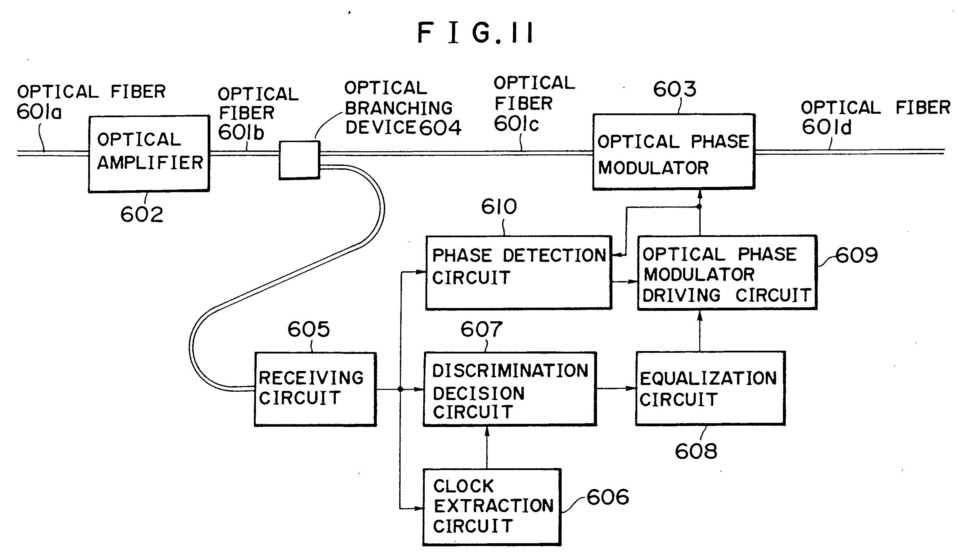

In Fig.11, the NRZ modulated optical signal of wavelength 1.57µm and intensity modulated signal speed 10Gb/s, is transmitted in the optical fiber 601a of 1. 55µm zero dispersion optical fiber. Then the NRZ optical signal is optically amplified in the optical amplifier 602, and the output light is phase-modulated in the optical phase modulator 603 for performing dispersion pre-equalization like the same way as the third embodiment. However, the method to generate the driving signal to charge on the optical phase modulator 603 is different.

In this embodiment the output signal of the receiving circuit 605 is discriminated in the discrimination decision circuit 607 in response to the clock signal extracted in the clock extraction circuit 606, and then performed equalization of waveform in the equalization circuit 608. The signal output from the equalization circuit 608 is converted to a drive signal by the optical phase modulator driving circuit 609. The signal level of the driving signal and the phase control of the driving signal utilizing the output of the phase detection circuit 610 are similar to them of the third embodiment.

Next, the fifth embodiment is explained.

In Fig.12, the transmission optical signals of wavelength λ1 to wavelength λ4, are respectively sent from optical transmitters 701 to 704, and then, they are waveform-multiplexed in the optical multiplexing circuit 705, and sent out to the optical transmission path 706 consisting of the optical fiber of which zero dispersion wavelength is 1.55µm. Here, the wavelengths are λ1=1. 555µm, λ2=1.560µm, λ3=1.565µm and λ4=1.570µm, respectively, and the outputs of the sending signals to the optical transmission path 706 are all +3dBm.

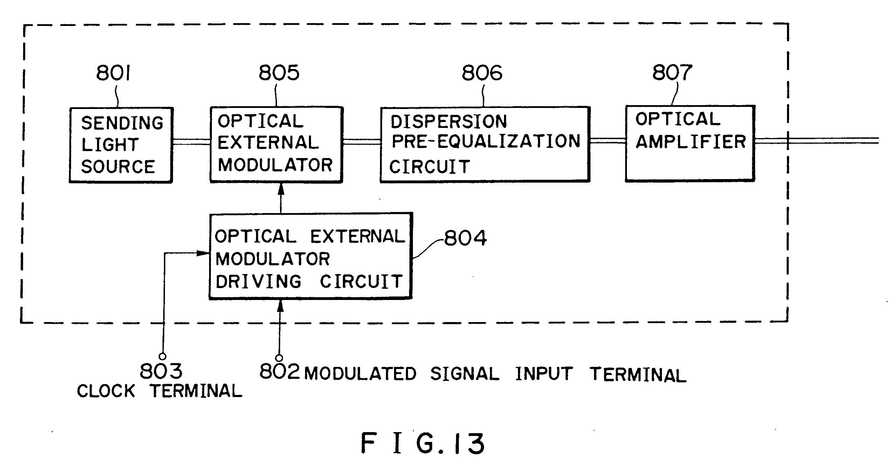

The configurations of the optical transmitters 701 to 704 are explained referring the optical transmitter 704 as an example using Fig.13. The optical transmitters 701 to 703 are only different in the wavelength of the sending light source and the dispersion equalization quantity given at the dispersion equalization circuit, others are completely similar to the optical transmitter 704.

In Fig.13, a distribution feedback type semiconductor laser 801 that is a sending light source emits a DC light of wavelength λ4. It is intensity-modulated correspondingly to the data signal in the optical external modulator 805 driven by the optical external modulator driving circuit 804 according to an RZ (Return-to-zero) modulated data signals of 10Gb/s supplied to the modulated signal input terminal 802 and the clock signal of 10Gb/s supplied to the clock input terminal 803. Then, so called prechirp is performed to pre-equalize against wavelength dispersion in the dispersion pre-equalization circuit 806. The optical signal performed dispersion pre-equalization is optically amplified to +6dBm in the optical amplifier 807, and sent out to the optical multiplexing circuit 705 in Fig.12. Here, as the insertion loss of the optical multiplexing circuit 705 is about 4dB, the optical sending power level of each wavelength to the optical transmission path 706 is +2dBm.

The dispersion pre-equalization circuit 806 is preferable to be similar to those of the first and second embodiments.

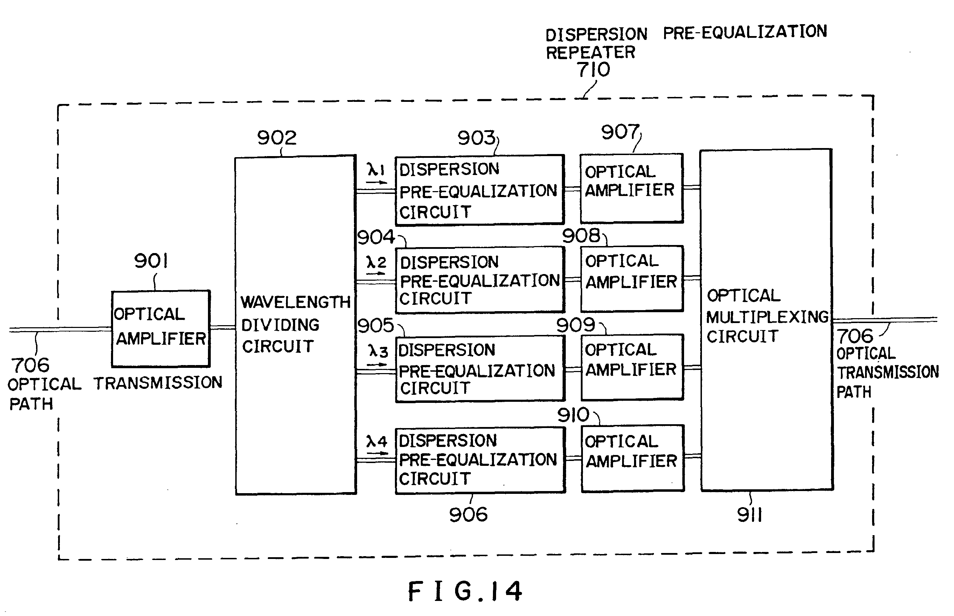

Now, being optically amplified in the optical amplifiers 707 and 708 installed in each 80km, the optical signals of λ1 to λ4 sent out to the optical transmission path 706 are transmitted as far as 240km, and supplied to the dispersion pre-equalization repeater 710 that performs dispersion pre-equalization and optical amplification. Here, the transmission loss of the optical fiber that is a transmission path is about 0.25dB/km in each wavelength, the input levels of the optical signals in each wavelength to the optical amplifiers 707 and 708 are all -18dBm, gain in the optical amplifier for the optical signal in each wavelength is 20dB, and the output level of the optical signals in each wavelength are +2dBm. Therefore, the input levels of the optical signals in each wavelength to the dispersion pre-equalization optical repeater 710 are -18dBm. In this dispersion pre-equalization optical repeater, dispersion pre-equalization is performed to the optical signals in each wavelength, the optical signals in each wavelength are optically amplified to +2dBm, and sent out to the optical transmission path 706 again. The configuration and functions of this dispersion pre-equalization repeater are explained using Fig.14.

Fig.14 is a block diagram showing the configuration of the dispersion pre-equalization repeater 710. The optical signals in each wavelength transmitted through the optical transmission path 706 are respectively supplied to the optical amplifier 901 at -18dBm in each optical signal power level. The optical amplifier 901 outputs an optical signal at -8dBm in optical power level and in each wavelength after obtaining 10dB gain. The optical signals multiplied in wavelength are divided to components in the wavelength dividing circuit 902. The signals of wavelength λ1 to λ4 are output to first to fourth dispersion pre-equalization circuits 903 to 906, respectively. The configurations of these dispersion pre-equalization circuits, as well as the optical transmitters, are preferably to be similar to them in the first embodiment and the second embodiment. The optical signals in each wavelength performed dispersion pre-equalization are dispersion-pre-equalized by the sending devices 701 to 704 of each wavelength for sending length 240km for each wavelength hereinbefore. In order to approximately reproduce the output waveforms of the optical transmitters 701 to 704 (in Fig.12), the divided signals are respectively transmitted to the dispersion pre-equalization circuits 903 to 906. These optical input signals are performed dispersion pre-equalization in each wavelength like the dispersion pre-equalization circuits in the optical transmitters 701 to 704. After this dispersion pre-equalization, optical amplification is performed in the first to fourth optical amplifiers 907 to 910 connected in backward of the optical phase modulator to compensate insertion loss of the dispersion pre-equalization circuit and the optical multiplexing circuit in backward step, and gain 22dB is given. The optical signals in each wavelength performed dispersion pre-equalization and optical amplification are multiplexed in wavelength in the optical wavelength multiplexing circuit 911, and then transmitted to the optical transmission path 706 again. Here, as loss in the wavelength demultiplexing circuit 902 is 4dB, losses in the dispersion pre-equalization circuits 903 to 906 are respectively 4dB, also loss in the optical multiplexing circuit 911 is 4dB, the output level of the optical multiplexing circuit 911 to the optical transmission path 706 is +2dBm.

In the optical transmission from the dispersion pre-equalization optical repeater 710 to the wavelength dividing circuit 713 installed in forward of the optical receivers for each wavelength 714 to 717, the transmission conditions such as optical sending power level to the optical transmission path 706, transmission length, characteristics of the optical fiber that is the optical transmission path, gain of the two optical amplifiers installed in the transmission path and optical receiving power level are set up approximately similar to the conditions from the output terminal of the optical wavelength multiplexing circuit 705 in backward of the optical transmitters 701 to 704 to the dispersion pre-equalization optical repeater 710, so that, approximately same transmission characteristics from the optical transmitters 701 to 704 to the dispersion pre-equalization optical repeater 710. The optical signal level of each wavelength input to the wavelength dividing circuit 713 in front of the optical receiver 714 to 717 of each wavelength is -18dBm, the optical signal level to the optical receivers is -22dBm (that is, insertion loss of the wavelength dividing circuit 713 is 4dB), also received waveforms are approximate reproductions of the sent waveforms, thus optical signals of each wavelength are received in the optical receivers 714 to 717. Moreover, the minimum receiving sensitivity of the optical receivers is about -27dBm, there is about 5dB margin.

In the fifth embodiment, the number of the different wavelengths is set at four, but the number is not restricted to this. Also it is clear that multi-step connection is feasible although the number of the step of dispersion pre-equalization optical repeater that performs dispersion pre-equalization is set up one. It is feasible to practice similar dispersion pre-equalization optical trunk transmission for the NRZ modulated signals. In this case, the circuit for the dispersion pre-equalization is preferable to that in the third embodiment and fourth embodiments. Also the distance from the optical amplifier nearest to the receiving end to the receiving end is around 80km. However, the minimum receiving sensitivity can be raised over 10dB by utilizing an optical amplifier as an optical pre-amplifier in the optical receiver. Therefore, it is possible to expand this distance to 120km. In this case, however, the dispersion value of dispersion pre-equalization in the optical repeater is not for 240km, but for 280km. Although the wavelength of the light source is said to be in the 1.55µm band, it is not restricted to this value. For example, it is also feasible for it to be in the 1.3µm band. Further, the wavelength band is, in the particular embodiment, longer than the zero dispersion wavelength, but this is also not restrictive. Moreover, the direction of chirping (the code of phase variation) maybe reversed between the longer wavelength side and the shorter wavelength side of the zero dispersion wavelength.

Other variations and modifications of the embodiments described, as well as other embodiments than the particular embodiments described herein, by way of example, may be conceived within the scope of the appended claims.

## Claims

1. An optical transmission system including a plurality of optical transmitters (701-704) each having a light source of a different wavelength (λ₁-λ₄) from the others, optimum dispersion pre-equalization (701) is performed for each wavelength, signal lights sent from the optical transmitters being multiplexed in a first optical multiplexing circuit (705) and sent to an optical transmission path (706), optical multiplexed signals sent out to the optical transmission path being divided at an optical dividing circuit (902) into a plurality of wavelengths corresponding to each wavelength of the optical transmitters (701-704) at one or more points in the optical transmission path (706) to an end, wherein optical signals are optically amplified (907) and optimum dispersion pre-equalized (903-906) in each wavelength, the signals being multiplexed and sent out again at a second optical multiplexing circuit (911) to the optical transmission path (706) and transmitted to end through an optical trunk circuit, the signals being divided again to plural optical signals corresponding to each optical wavelength at the receiving end, these optical signals are received by an optical receiver (714-717) at each wavelength.
